# EUROPÄISCHE PATENTANMELDUNG

(11) **EP 3 742 240 A1**
(43) Veröffentlichungstag der Anmeldung: **25.11.2020**
(21) Anmeldenummer: 19175904.2
(22) Anmeldetag: 22.05.2019
(51) Int. Cl.: G05B 19/042, G05B 19/05, G06F 8/658, G06F 9/445

(54) **VERFAHREN UND ENGINEERING-SYSTEM ZUR ÄNDERUNG EINES PROGRAMMS EINER INDUSTRIELLEN AUTOMATISIERUNGSKOMPONENTE**

(71) Anmelder: Siemens Aktiengesellschaft, 80333 München (DE)
(72) Erfinder: Fischer, Christian, 91217 Hersbruck (DE); Frank, Michael, 96155 Buttenheim (DE); Pfahlmann, Lothar, 91083 Baiersdorf (DE)

(57) **Zusammenfassung**

Die Erfindung betrifft ein Verfahren zur Änderung eines Programms einer industriellen Automatisierungskomponente, das Programm aus einer Mehrzahl von Programmelementen (A, ..., H) besteht, wobei zur Änderung des Programms geänderte Programmelemente und davon abhängige Programmelemente von einem Engineering-System zu der Automatisierungskomponente übertragen werden. Dabei wird das Programm in Units (U_D, U_P) strukturiert, wobei eine Unit (U_D, U_P) eine Gruppe von Programmelementen (A, ..., H) umfasst, und sowohl veröffentlichte Programmelemente (A, B, E, F) mit einer von den Programmelementen anderer Units referenzierbaren Schnittstelle, als auch nichtveröffentlichte Programmelemente (C, D, G, H) umfassen kann, wobei über die Schnittstellen eine Prüfsumme (UIFFP) gebildet und der Unit (U_D, U_P) jeweils zugeordnet wird, wobei bei einer Änderung zumindest eines Programmelementes (A, ..., H) der auf dem Engineering-System gespeicherten Version einer Unit die Prüfsumme (UIFFP) der somit geänderten Unit (U_D, U_P) mit der Prüfsumme (UIFFP) der auf der Automatisierungskomponente vorhandenen bisherigen Version dieser Unit (U_D, U_P) verglichen wird, und wobei im Falle einer Übereinstimmung der Prüfsummen (UIFFP) nur die geänderte Unit (U_D, U_P) von dem Engineering-System zu der Automatisierungskomponente übertragen wird. Dadurch kann die Konsistenz eines Programms einer industriellen Automatisierungskomponente erhalten werden und dabei ein schnelleres Update der Software erfolgen.

## Beschreibung

Die Erfindung betrifft ein Verfahren zur Änderung eines Programms einer industriellen Automatisierungskomponente gemäß dem Oberbegriff des Patentanspruchs 1, und ein Engineering-System zur Änderung eines Programms einer industriellen Automatisierungskomponente gemäß dem Oberbegriff des Patentanspruchs 7.

Industrielle Automatisierungskomponenten, insbesondere die speicherprogrammierbaren Steuerungen, werden zur Automatisierung von Produktionssystemen und zur Automatisierung prozesstechnischer Anlagen eingesetzt. Dabei werden regelmäßig Sensorwerte durch ein ablaufendes Programm verarbeitet und in Befehle für Aktoren umgesetzt, so dass eine Steuerungsaufgabe erfüllt werden kann.

Die Programme (Steuerungsprogramme) für moderne industrielle Automatisierungskomponenten (PLC-speicherprogrammierbare Steuerung) sind hoch komplex und bestehen deswegen aus einer Vielzahl von Programmelementen. Solche Programmelemente können beispielsweise Funktionsbausteine, Funktionsblöcke oder ähnliche Einheiten sein, die bei der Herstellung eines Programms oft aus Bibliotheken, z.B. Baustein-Bibliotheken, entnommen werden und dann mit einem Programmierwerkzeug, dem Engineering-System, zu einem ablauffähigen Programm gefügt werden. Dabei ist regelmäßig eine Automatisierungsaufgabe in einem Engineering-System oder in einer Vielzahl von Engineering-Systemen ("Multiuser-Systeme") als sogenanntes "Projekt" angelegt, welches alle Facetten, beispielsweise Hardware-Projektierung, Software-Programmierung, Programmierung der Bedien- und Beobachtungsgeräte (HMI-Human Machine Interface) umfasst. Aus einem solchen Projekt heraus wird dann auch das Automatisierungsprogramm (kurz: Programm) kompiliert, zu dem Ziel, nämlich der industriellen Automatisierungskomponente, übertragen, und dort zur Ausführung gebracht.

Wie erwähnt, bestehen moderne Programme für Automatisierungskomponenten aus einer Vielzahl von Programmelementen. Die Programme sind so komplex, dass regelmäßig mehrere Programmentwickler an mehreren Arbeitsplätzen, also mit mehreren Engineering-Systemen, gleichzeitig an einem Projekt arbeiten. Programme werden auch weiterentwickelt und geändert, während diese sich im produktiven Einsatz befinden. Deshalb ist es vorteilhaft, im Falle von Änderungen nicht immer das komplette Programm neu zu erstellen, erneut zu der Automatisierungskomponente zu übertragen und - was einen zwischenzeitlichen Stopp des Systems zur Folge hätte - neu zu starten, sondern nur geänderte Programmelemente neu zu dem Ziel zu übertragen ("delta download") und dort oft sogar während des laufenden Betriebs zum Update des Programms zu verwenden.

Die Programmelemente eines Programms für Automatisierungskomponenten haben Abhängigkeiten untereinander. Dies bedeutet, dass aus einzelnen Programmelementen hinaus andere Programmelemente referenziert werden, also zur Laufzeit aufgerufen und verwendet werden. Anders herum werden einzelne Programmelemente auch von anderen entsprechend referenziert, also auch selbst aufgerufen. Bei der Referenzierung wird dabei auf das sogenannte Interface der jeweiligen Programmelemente zugegriffen, wobei das Interface also die Schnittstelle zum Aufruf und zur Verwendung eines Programmelementes ist.

Probleme können insbesondere dann auftreten, wenn mehrere Bearbeiter gleichzeitig das Programm ein- und derselben industriellen Automatisierungskomponente (PLC) bearbeiten, weil dabei das Risiko konkurrierender und nicht untereinander abgestimmter Änderungen besonders hoch ist. Insbesondere Änderungen an den Schnittstellen (Interfaces) von Programmelementen führen oft zu inkonsistenten Zuständen der Steuerung bzw. Automatisierungskomponenten. In einem solchen Fall kann die Steuerung in den "Stopp"-Zustand versetzt werden, ohne dass dies vorher absehbar ist, und dabei sogar Schäden an einer prozesstechnischen Anlage oder einer Produktionsanlage verursachen.

Es ist daher eine Anforderung an moderne Automatisierungssysteme, also sowohl an die industriellen Automatisierungskomponenten als solche, als auch an die Engineering-Systeme, die Konsistenz von Programmen der Automatisierungskomponenten bei Teil-Aktualisierungen sicherzustellen, während die Leistungsfähigkeit (Performance) möglichst nicht beeinträchtigt werden soll.

Zur Lösung dieser Aufgabe sind verschiedene Ansätze bekannt. So gibt es Strategien, die zwar nicht einen Benutzer daran hintern, einen inkonsistenten Zustand auf der Automatisierungskomponente zu erstellen, aber beispielsweise führt eine Firmware der Automatisierungskomponente vor der Inbetriebnahme neu geladener Programmelemente einen Konsistenz-Prüfungsschritt aus und bringt die Automatisierungskomponente im Fehlerfall in einen Stopp-Status (Nothalt), allerdings ohne Vorwarnung. Dadurch werden zwar oft weitergehende Schäden verhindert, aber es kommt natürlich zu einem Produktionsausfall durch die außer Betrieb gesetzte Steuerungseinrichtung (Automatisierungskomponente).

Eine andere Strategie besteht darin, das Engineering-System als verantwortliche Stelle für die Konsistenz und Konsistenzprüfung einzusetzen, indem aktuelle Änderungen, die im Engineering-System in der dort gespeicherten Kopie des Projektes ("Offline-Project") vorgenommen haben, mit Änderungen zu synchronisieren, die andere Anwender zwischenzeitlich an dem Programm vorgenommen haben, welches bereits auf der Steuerung vorliegt. Dies wird regelmäßig dergestalt ausgeführt, indem zunächst alle geänderten Programmelemente (Objects), die zwischenzeitlich auf der Automatisierungskomponente geändert wurden, zunächst zu dem Engineering-System übertragen werden ("Upload"). Damit ist das sogenannte "Offline-Project" aktualisiert, so dass eine Konsistenzprüfung mittels des Engineering-Systems durchgeführt werden kann. Zwar werden damit plötzliche Außerbetriebsetzungen weitgehend verhindert und daher die Laufzeit-Performance verbessert, allerdings führt dies zu Einschränkungen bei der Benutzung der Engineering-Systeme, weil das häufige Synchronisieren und der damit verbundene "Upload" von Software aufwendig ist und die Performance des Engineerings, der Automatisierungskomponente und des Netzwerks beeinträchtigt. Kurz gesagt wird durch die zuletzt geschilderte Strategie das Problem der Synchronisierung von der Ablaufumgebung der Automatisierungskomponente hin zu den Engineering-Systemen verschoben, insgesamt aber nicht verbessert.

Es ist also eine Aufgabe der vorliegenden Erfindung, die Konsistenz eines Programms für eine industrielle Automatisierungskomponente bei Änderung an einzelnen Objekten oder Programmelementen, ohne eine Einbuße der Performance sowohl der Automatisierungskomponente als auch des Engineering-Systems, sicherzustellen.

Es ist eine Kernidee der erfindungsgemäßen Lösung dieser Aufgabe, ein Software-Projekt für eine industrielle Automatisierungskomponente in einfach handhabbare Teile zu unterteilen, die sogenannten "Units". Die Unit hält dabei neben Programmcodes vorteilhaft auch private Daten, die vorzugsweise verschlüsselt sind. Auch der Programmcode ist vorzugsweise verschlüsselt. Eine Software-Unit kann dabei sowohl interne ("non-public") als auch veröffentlichte ("public") Software-Elemente umfassen, wobei nur die veröffentlichten (public) Software-Elemente von "außen", also von anderen (externen) Units und Programmelementen, adressiert und verwendet werden können. Somit prägen nur die "public" Software-Elemente, also die veröffentlichten Software-Elemente, das von außen sichtbare Interface (Schnittstelle) einer Unit. Somit kann eine Unit (Software-Unit) andere Units referenzieren, um die veröffentlichen Software-Elemente der referenzierten Units zu verwenden. Nicht-veröffentlichte Software-Elemente (non-public) können dagegen nur innerhalb derselben Unit adressiert oder referenziert werden, haben also kein nach außen (außerhalb der eigenen Unit) sichtbares Interface. Durch das Konzept der Units und der dabei betrachteten Schnittstellen (Interfaces) der veröffentlichten (public) Programmelemente können die Abhängigkeiten zwischen den einzelnen Units kontrolliert werden, so dass Inkonsistenzen bei der Änderung von einzelnen Programmelementen bereits im Vorfeld vermieden werden können.

Eine Unit stellt dabei generell eine ladbare (Down- und Upload) Einheit dar. Units sind dabei einzeln handhabbare Elemente für eine Baustein-Veröffentlichung, mit eigener Kontrolle über Abhängigkeiten ("Unit-Referenzen") und geeignet zur Strukturierung der Software in (wiederverwendbare) Einheiten.

Während es generell bereits bekannt ist, Software-Lösungen in einzelne Software-Komponenten für die unterschiedlichsten Zwecke zu strukturieren, beispielsweise zur Vereinfachung, zur Wiederverwertung von einzelnen Bausteinen, zum Verbergen ("Hiding") von internen Strukturen und zum separaten Verteilen und "download" einzelner Komponenten, können bei den hier betrachteten Units durch eine im weiteren Verlauf näher erläuterte Analyse und Verwaltung der Software-Schnittstellen der veröffentlichten enthaltenen Programmelemente die Abhängigkeiten zwischen den einzelnen Units klar nachvollzogen und bei der Verwaltung der "downloads" berücksichtigt werden. Damit werden feingranulare Updates sicherer und können auf die für das Update notwendigen Units beschränkt werden, was die zu übertragenden Datenmengen reduziert. Zugleich ist es durch die hier beschriebene Verwaltung der Schnittstellen der "units" möglich, die Anzahl der "units", die zur Aktualisierung eines Projektes auf dem Engineering-System hochgeladen werden müssen, auf diejenigen zu beschränken, deren von anderen Units angesprochenes Interface sich zwischenzeitlich geändert hat oder die auf ein zwischenzeitlich geändertes Interface anderer Units referenzieren.

Bezogen auf die Automatisierungstechnik und insbesondere auf den Aspekt der Verteilung von Software ("deployment") bedeutet dies, dass Benutzer eines Engineering-Systems damit in die Lage versetzt werden, einzelne Units, also spezielle Programmbausteine, die üblicherweise in den Verantwortungsbereichs eines Software-Ingenieurs fallen (Units können benutzt werden, um Verantwortungsbereiche abzugrenzen - besonders bei der Inbetriebnahme), zu einer Steuerung und insbesondere zu einer industriellen Automatisierungskomponenten übertragen, wobei die Units wohl definierte Abhängigkeiten, insbesondere gegenseitige oder einseitige Referenzierungen, zu anderen Units sowohl im Offline-Projekt als auch zu der bereits auf der Automatisierungskomponente vorhandenen Konstellation haben. Dabei wird vermieden, dass alle auf der Automatisierungskomponente zwischenzeitlich geänderten Programmelemente in das "Offline-Projekt" auf dem Engineering-System hochgeladen werden müssen, um über die Konsistenz des geänderten Programms der Automatisierungskomponente zu entscheiden. Dieser Vorgang könnte sich möglicherweise auch störend für die Arbeit des betroffenen SW-Engineers auswirken, wenn die hochgeladenen Teile nicht in seinen Verantwortungsbereich ("seine" Units) fallen. Stattdessen wird die Entscheidung über die Konsistenz und die durchzuführenden Maßnahmen zur Erhaltung der Konsistenz vielmehr an die Änderungen der öffentlichen Schnittstellen (Interfaces) der Units gebunden. Als Konsequenz verringert sich die Menge der Daten, die für den Zweck des Konsistenz-Managements regelmäßig von der Automatisierungskomponente zu den Engineering-Systemen hochgeladen werden müssen, wobei sich weiterhin durch die Optimierung der Anzahl der zu der Automatisierungskomponente zu übertragenen Programmelemente (download) die Integration in das bestehende Programm ("delta download" und "delta-compile") beschleunigt, wodurch sich der gesamte Ablauf (Workflow) signifikant beschleunigen lässt.

Die Aufgabe wird insbesondere durch das Verfahren gemäß Patentanspruch 1 und durch das Engineering-System gemäß Patentanspruch 7 gelöst.

Dabei wird ein Verfahren zur Änderung eines Programms einer industriellen Automatisierungskomponente vorgeschlagen, wobei das Programm aus einer Mehrzahl von Programmelementen besteht, wobei zur Änderung des Programms geänderte Programmelemente und davon abhängige Programmelemente von einem Engineering-System zu der Automatisierungskomponente übertragen werden. Dabei wird das Programm zumindest teilweise in Units strukturiert, wobei eine Unit eine Gruppe von Programmelementen umfasst, wobei eine Unit sowohl veröffentlichte Programmelemente, als auch nicht-veröffentlichte Programmelemente umfassen kann. Veröffentlichte Bausteine einer Unit können von Bausteinen einer anderen Unit verwendet werden, sobald die verwendende Unit die anbietende Unit referenziert. Nicht veröffentlichte Bausteine können von anderen Units nicht verwendet werden., Dabei wird über die Schnittstellen der veröffentlichen Programmelemente jeder Unit eine Prüfsumme gebildet und der Unit jeweils zugeordnet, wobei bei einer Änderung zumindest eines veröffentlichten Programmelementes die aktuelle Prüfsumme als ungültig erklärt und beim nächsten Compile/Download neu berechnet wird und dann auf dem Engineering-System die Prüfsumme der somit geänderten Unit mit der Prüfsumme der auf der Automatisierungskomponente vorhandenen bisherigen Version dieser Unit verglichen wird, und wobei im Falle einer Übereinstimmung der Prüfsummen nur die geänderte Unit von dem Engineering-System zu der Automatisierungskomponente übertragen wird, und anderenfalls auch alle anderen Units, die die geänderte Unit referenzieren, in ihrer jeweils aktuellen Version des Engineering-Systems zu der Automatisierungskomponente übertragen werden.

Die Abhängigkeiten werden ausgehend von einer geänderten bzw. ausgewählten Unit dabei in zwei Richtungen geprüft. In einer ersten Richtung werden die referenzierten Units, welche vorzugsweise in einem Relation-Editor aufgelistet sind, und in einer zweiten Richtung die referenzierenden Units geprüft.

Die vom Benutzer ursprünglich geänderten bzw. ausgewählte(n) Unit(s) wird/werden unabhängig von Änderungen der Prüfsumme(n) immer auf das Zielsystem "runtergeladen" - das will ja der Benutzer so. Diejenigen anderen Units, die der Benutzer nicht explizit ausgewählt hat, aber vom System als abhängige (in beiden Richtungen) erkannt hat, werden zusätzlich aktualisiert. Durch das Verwenden eines einfachen Wertes, also der Prüfsumme, für die Charakterisierung der veröffentlichten Schnittstelle einer Unit und durch die damit vereinfachte Berechnung der Abhängigkeiten zwischen den einzelnen Units ist es einem Benutzer möglich, mittels des Engineering-Systems die Konsistenz eines Programms einer industriellen Automatisierungskomponente zu erhalten und dabei ein vergleichbar schnelles Update der Software durch das Übertragen vergleichsweise weniger, also nur der erforderlichen, Units für das gesamte Projekt zu bewerkstelligen.

Die Aufgabe wird außerdem durch ein Engineering-System zur Änderung eines Programms einer industriellen Automatisierungskomponente unter Verwendung des vorstehend beschriebenen Verfahrens gelöst, wobei das Programm aus einer Mehrzahl von Programmelementen besteht, wobei das Engineering-System dazu eingerichtet ist, zur Änderung des Programms geänderte Programmelemente und davon abhängige Programmelemente zu der Automatisierungskomponente zu übertragen. Dabei ist das Programm zumindest teilweise in Units strukturiert, wobei eine Unit eine Gruppe von Programmelementen umfasst, wobei eine Unit sowohl veröffentlichte Programmelemente mit einer von den Programmelementen anderer Units referenzierten oder referenzierbaren Schnittstelle, als auch nicht-veröffentlichte Programmelemente mit einer nur innerhalb derselben Unit referenzierten oder referenzierbaren Schnittstelle umfassen kann, wobei über die Schnittstellen der veröffentlichen Programmelemente jeder Unit eine Prüfsumme gebildet und der Unit jeweils zugeordnet wird, wobei bei einer Änderung zumindest eines Programmelementes der auf dem Engineering-System gespeicherten Version einer Unit die Prüfsumme der somit geänderten Unit mit der Prüfsumme der auf der Automatisierungskomponente vorhandenen bisherigen Version dieser Unit verglichen wird, und wobei im Falle einer Übereinstimmung der Prüfsummen nur die geänderte Unit von dem Engineering-System zu der Automatisierungskomponente übertragen wird, und anderenfalls auch alle anderen Units, die die geänderte Unit referenzieren, in ihrer jeweils aktuellen Version des Engineering-Systems zu der Automatisierungskomponente übertragen werden. Mit einem derart ausgestalteten Engineering-System können die Vorteile realisiert werden, die bereits anhand des Verfahrens diskutiert wurden.

Vorteilhafte Ausgestaltungen der Erfindung sind in den abhängigen Patentansprüchen angegeben. Die vorteilhaften Ausgestaltungen des Verfahrens gelten sinngemäß auch für das erfindungsgemäße Engineering-System, und umgekehrt. Vorteilhafte Ausgestaltungen können sowohl einzeln, als auch in Kombination miteinander realisiert werden.

Vorteilhaft werden vor der Übertragung der Unit die Prüfsummen der referenzierbaren Schnittstellen anderer auf der Automatisierungskomponenten vorhandenen Units, die durch die geänderte Unit referenziert werden, zu dem Engineering-System übertragen und dort mit den Prüfsummen der entsprechenden Versionen dieser auf dem Engineering-System vorhandenen Versionen der Units verglichen, wobei im Falle einer Abweichung die Units mit den abweichenden Prüfsummen von der Automatisierungskomponente zu dem Engineering-System geladen werden, dort eine Konsistenz der Referenzierenden wieder hergestellt wird, und danach alle betroffenen Units zu der Automatisierungskomponente übertragen werden. Gleiches gilt vorteilhaft auch für die Units auf der Automatisierungskomponente, die die geänderte Unit referenzieren. Durch eine Rekursion dieser Vorgänge werden damit alle notwendigen Bereinigungen, die sich durch die Änderung eines Interfaces eines veröffentlichten Programmelementes ergeben, erfasst und durchgeführt.

Vorteilhaft wird als das Programmelemente ein Funktionsbaustein, eine Funktion oder eine andere Funktionseinheit eines Automatisierungsprogramms verwendet.

In einer vorteilhaften Ausführungsform wird als die Prüfsumme ein Hash-Wert, ein digitaler Fingerprint oder ein anderer änderungssensitiver Indikator über die Übergabeparameter der referenzierbaren Schnittstellen der veröffentlichten Programmelemente einer Unit verwendet.

Die Wiederverwendbarkeit von Programmcode wird vereinfacht, indem die Programmelemente des Programms für die industrielle Automatisierungskomponente in Units gegliedert werden, wobei die Gliederung anhand funktionaler Kriterien erfolgt, so dass die Programmelemente, die zu einer konkreten Funktionalität des Programms notwendig sind, in eine oder mehrere Units zusammengefasst werden.

Kleinere Änderungen an einem Projekt werden einfacher und schneller umgesetzt, wenn die Zuordnung der Programmelemente zu den Units rekonfiguriert wird, wobei durch die Rekonfiguration die Anzahl der Referenzierungen zwischen den Units verringert wird. Die Units werden also neu und in optimierter Weise "zugeschnitten". Dieser Schritt kann zugleich mit der Strategie, nach der die Units funktional gegliedert sind, durchgeführt werden, so dass für eine konkrete Funktionalität eine Anzahl Units vorgesehen wird, wobei jede Unit möglichst wenige externe, öffentliche Referenzen verwendet oder offenlegen muss.

Ein Ausführungsbeispiel für das erfindungsgemäße Verfahren und zugleich für die erfindungsgemäße Anordnung bzw. das Engineering-System wird nachfolgend anhand der Zeichnungen erläutert. Dabei zeigen:
- Figur 1: Units mit Programmelementen, wobei eine der Units von der anderen referenziert wird, und
- Figur 2: einen ersten und einen zweiten Fall von Änderungen an den Interfaces von Programmelementen der Units und die entsprechenden Konsequenzen für das Update auf eine Automatisierungskomponente.

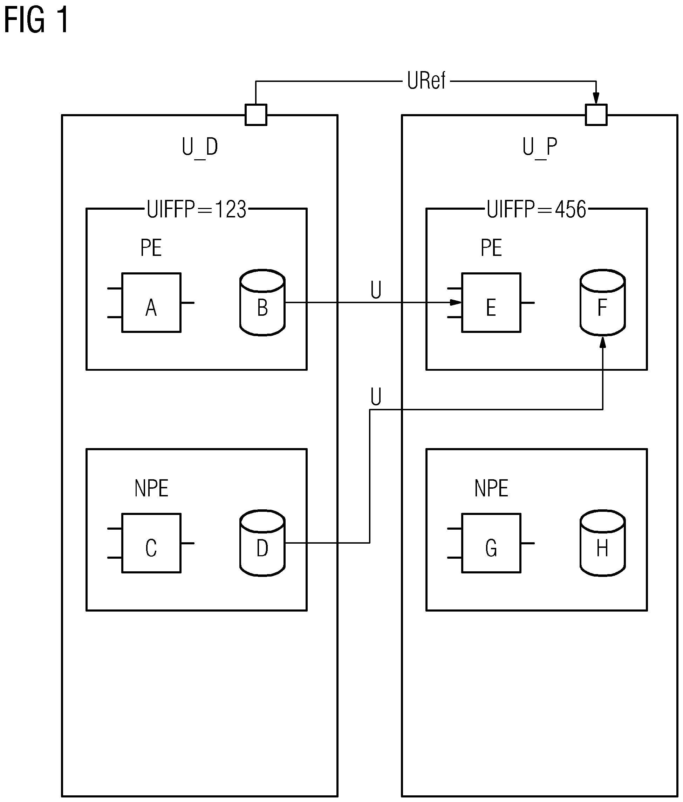

In der Figur 1 sind zwei Units U_D, U_P dargestellt, beispielsweise die Unit U_D für einen Bohrvorgang ("drill") und die Unit U_P für einen bestimmten Verfahrensschritt ("process") .

Die Unit U_D referenziert die Unit U_P, was durch den Pfeil mit dem Bezugszeichen URef symbolisiert wird. Dabei sind in den Units U_D, U_P verschiedene Programmelemente A, ..., H angeordnet, wobei die Programmelemente A, B, E, F veröffentlichte Programmelemente PE (Public Elements) sind, und die Programmelemente C, D, G, H nicht-veröffentlichte Programmelemente NPE (non public elements) sind. Die von der Unit U_P und U_D veröffentlichten Programmelemente PE sind auch durch Programmeelemente, die nicht der eigenen Unit angehören, referenzierbar, also verwendbar bzw. adressierbar. Nicht-veröffentlichte Programmelemente NPE sind nur innerhalb derselben Unit verwendbar oder referenzierbar. Für die Beziehung zwischen Bausteinen, die in einer Verwendungsbeziehung stehen, wird manchmal auch anstelle "Referenz" auch der Begriff "Relation" verwendet. Generell können die Programmelemente ausführbarer Programmcode sein, beispielsweise Programmblöcke, Routinen, Subroutinen, etc., aber auch Daten bzw. Datenbausteine, Variablen (Tags), Schnittstellen zu Ein- und Ausgabehardware ("IO-Schnittstellen") oder dergleichen.

Im Ausführungsbeispiel benutzen die Programmelemente B, D der Unit U_D die veröffentlichten Programmeelemente E, F der anderen Unit U_P. Dies wird durch Pfeile mit dem Bezugszeichen U ("uses") dargestellt.

In den Units U_D, U_P ist jeweils über die Charakteristika der Schnittstellen der veröffentlichen Programmelemente A, B, einerseits und E, F andererseits jeweils eine Prüfsumme UIFFP ("Software-Unit Interface Fingerprint") gebildet; dieser Wert beträgt für die Unit U_D im Ausgangsfall 123 und für die U_P im Ausgangsfall 456. Diese Prüfsumme ändert sich immer dann, wenn sich am Zugriff (Software Interface) der in der Prüfsumme repräsentierten Programmelemente A, B einerseits oder E, F andererseits funktional etwas ändert. Dies bedeutet, dass sobald ein Interface eines veröffentlichen Programmelementes derart geändert wird, dass bei der benutzenden bzw. referenzierenden Stelle daraus eine Änderung erfolgt, sich eine abweichende Prüfsumme ergibt.

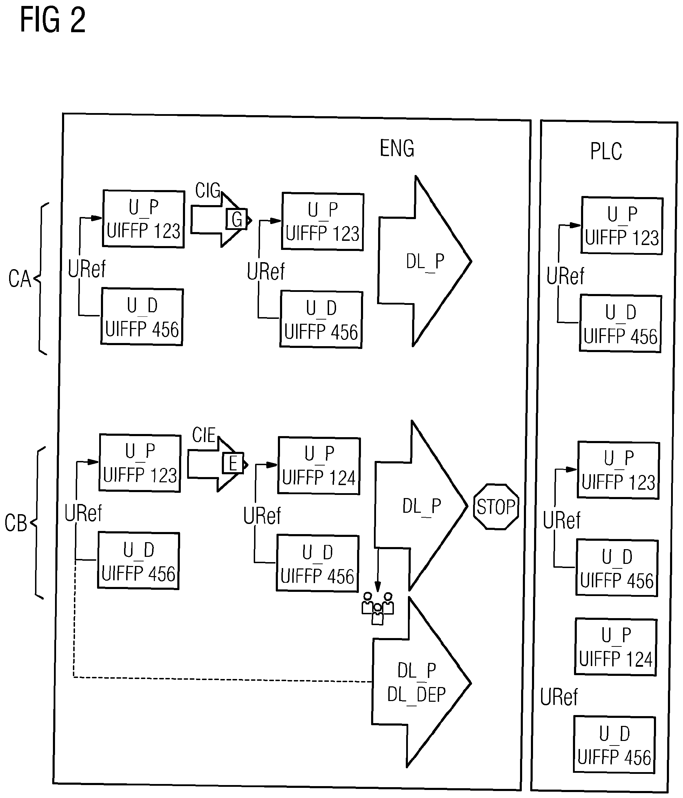

Die im Rahmen der Figur 1 erläuterten Units U_D, U_P liegen auch den Erläuterungen der nachfolgend besprochenen Figur 2 zu Grunde.

Die Figur 2 zeigt die bereits aus der Figur 1 bekannten Units U_D, U_P. Dabei wird anhand von zwei verschiedenen Fällen CA, CB eine jeweilige Änderung eines der Programmelemente und die daraus folgenden Konsequenzen für den partiellen Download der Units aus dem Engineering-System ENG zu einer Automatisierungskomponente PLC erläutert.

Im ersten Fall CA (Change A) wird in einem Schritt CIG (Change Interface G) die Schnittstelle des Programmelementes G der Unit U_P geändert. Das Programmelement G ist ein nichtveröffentlichtes Programmelement, welches nur innerhalb der Unit U_P verwendet wird. Entsprechend verändern sich die Prüfwerte (Fingerprints) UIFFP der Unit U_P nicht. Wird nun eine Aktualisierung des Programms auf der Automatisierungskomponente PLC angestoßen, indem der Benutzer, der eine Unit (hier: Unit U_P), in der er die Änderung gemacht hat, auswählt und auf die PLC laden will (Download), werden in einem ersten Schritt die Prüfwerte UIFFP der auf der Automatisierungskomponente PLC vorhandenen Versionen der Units U_P, U_D in das Engineering-System ENG geladen und dort gespeichert. Diese Prüfwerte UIFFP aus dem "Online-Projekt", also dem Projekt auf der Automatisierungskomponente PLC, werden verglichen mit den Prüfwerten UIFFP der "Offline-Versionen" ("Offline-Projekt") im Editor bzw. Programmspeicher des Engineering -Systems. Da sich in der Unit U_P nur ein nichtveröffentlichtes Programmelement geändert hat, welches keinen Einfluss auf den Prüfwert UIFFP 456 hat, entscheidet das Engineering-System ENG, dass es ausreicht, die geänderte und ausgewählte Unit U_P zu der Automatisierungskomponente PLC zu übertragen und dort in Betrieb zu nehmen, ohne die Konsistenz auf dem Zielsystem zu gefährden.

Im zweiten Fall CB wird das Offline-Projekt auf dem Engineering-System ENG in einem Arbeitsschritt CIE (Change Interface of Element E) eine Änderung am Programmelement E der Unit U_P vorgenommen, wobei diese Änderung auch das sogenannte Interface des Programmelementes E betrifft. Der Prüfwert (Fingerprint) UIFFP der Unit U_P ändert sich dadurch von 123 zu 124.

Nun liegt die Situation vor, dass die Version der Unit U_P, die auf dem Engineering-System bearbeitet wird, den Prüfwert 124 aufweist. In dem Online-Projekt, dessen Zustand in der Figur im Block PLC in der Mitte dargestellt ist, hat die Unit U_P aber noch das "alte" Interface mit der Prüfsumme 123. Der Benutzer wählt auch hier die Unit U_P zum Download aus. Nun werden bei der Initiierung des "Updates" der Software der Automatisierungskomponente PLC auch wieder die Prüfsummen UIFFP von der Automatisierungskomponente PLC abgerufen und in einen eigenen Speicherbereich des Engineering-Systems ENG gespeichert. Ein Vergleich der Prüfsummen des Online-Projektes und des Offline-Projektes ergibt nun die Diskrepanz der Prüfsummen UIFFP der beiden Versionen der Unit U_P.

Deswegen schlägt das System jetzt dem Benutzer vor, dass ein Download mit Abhängigkeiten DL_DEP vollzogen werden muss. Er hat keine Wahl - das Engineering-System verhindert hier zunächst den Download der ausgewählten Unit, um drohende Inkonsistenz auf der PLC zu vermeiden. Er muss also den ersten Versuch des Downloads mit 'cancel' abbrechen und ein ,Download with dependencies' auf der gleichen Unit U_P initiieren. die Benutzerabfrage ist in der Figur 2 symbolisch dargestellt und kann in einer anderen Variante auch entfallen. Dies bedeutet, dass nicht nur die geänderte Unit U_P in ihrer neuen Version zu der Automatisierungskomponente PLC übertragen wird, sondern auch diejenigen Units (in diesem Fall: die Unit U_D), die die geänderte Unit U_P referenzieren bzw. veröffentlichte Programmelemente dieser Unit U_P verwenden. Es findet also nicht nur ein Download DL_P der Unit U_P statt, sondern auch ein Download DL_DEP, also ein Download der Abhängigkeiten (Dependencies). Entsprechend werden beide Units U_P, U_D zu der Automatisierungskomponente PLC übertragen. Folglich ist im Block PLC der Figur 2 im unteren Teil dargestellt, dass nunmehr die Unit U_P mit dem neuen Prüfwert bzw. Prüfsumme 124 gespeichert ist; der Prüfwert bzw. die Prüfsumme UIFFP der Unit U_D hat sich aber nicht geändert.

Hier beginnt dann die Rekursion des Verfahrens. Die Unit U_D wurde zwar nicht von Benutzer explizit für den Download ausgewählt, aber vom Engineering-System als notwendig zum Download hinzugefügt. Für diese von System hinzugefügte Unit U_D wird nun der gleiche Prüfmechanismus angewendet und evtl. noch mehr Units als für eine Aktualisierung notwendig erachtet, abhängig vom Änderungszustand auf Des Zielsystems (PLC) und abhängig von den Unit-Referenz-Verflechtungen im Offline-Projekt.

Dadurch ist es möglich, die Konsistenz der Software auf einer Automatisierungskomponente auch dann zu erhalten, wenn mehrere Personen "offline" an einem Projekt arbeiten und zwischenzeitlich Änderungen konkurrierender Art zum Einsatz gekommen sind. Andererseits kann trotzdem der Umfang der zu übertragenden Software kleinstmöglich gehalten werden, was erreicht wird, indem nur solche Units übertragen werden müssen, die entweder selbst geändert wurden, oder aber die auf ein geändertes Interface eines Programmelementes einer anderen Unit zugreifen.

## Patentansprüche

1. Verfahren zur Änderung eines Programms einer industriellen Automatisierungskomponente,
wobei das Programm aus einer Mehrzahl von Programmelementen (A, ..., H) besteht,
wobei zur Änderung des Programms geänderte Programmelemente (A, ..., H) und davon abhängige Programmelemente (A, ..., H) von einem Engineering-System (ENG) zu der Automatisierungskomponente übertragen werden,
**dadurch gekennzeichnet,**
**dass** das Programm zumindest teilweise in Units (U_D, U_P) strukturiert ist,
wobei eine Unit eine Gruppe von Programmelementen (A, ..., H) umfasst, wobei eine Unit (U_D, U_P) sowohl veröffentlichte Programmelemente (PE; A, B, E, F) mit einer von den Programmelementen anderer Units (U_D, U_P) referenzierten Schnittstelle, als auch nicht-veröffentlichte Programmelemente (NPE; C, D, G, H) mit einer nur innerhalb derselben Unit referenzierten Schnittstelle umfassen kann,
**dass** über die Schnittstellen der veröffentlichen Programmelemente (PE; A, B, E, F) jeder Unit (U_D, U_P) eine Prüfsumme (UIFFP) gebildet und der Unit (U_D, U_P) jeweils zugeordnet wird,
**dass** bei einer Änderung zumindest eines Programmelementes (A, ..., H) der auf dem Engineering-System gespeicherten Version einer Unit (U_D, U_P) die Prüfsumme (UIFFP) der somit geänderten Unit (U_D, U_P) mit der Prüfsumme (UIFFP) der auf der Automatisierungskomponente vorhandenen bisherigen Version dieser Unit (U_D, U_P) verglichen wird, und
**dass** im Falle einer Übereinstimmung der Prüfsummen (UIFFP) nur die geänderte Unit (U_D, U_P) von dem Engineering-System (ENG) zu der Automatisierungskomponente übertragen wird, und
anderenfalls auch alle anderen Units (U_D, U_P), die die geänderte Unit (U_D, U_P) referenzieren, in ihrer jeweils aktuellen Version des Engineering-Systems (ENG) zu der Automatisierungskomponente übertragen werden.

2. Verfahren nach Patentanspruch 1,
**dadurch gekennzeichnet,**
**dass** vor der Übertragung der Unit die Prüfsummen (UIFFP) der referenzierbaren Schnittstellen anderer auf der Automatisierungskomponenten vorhandenen Units (U_D, U_P), die durch die geänderte Unit (U_D, U_P) referenziert werden, zu dem Engineering-System übertragen und dort mit den Prüfsummen (UIFFP) der entsprechenden Versionen dieser auf dem Engineering-System vorhandenen Versionen der Units (U_D, U_P) verglichen werden, wobei im Falle einer Abweichung die Units mit den abweichenden Prüfsummen (UIFFP) von der Automatisierungskomponente zu dem Engineering-System geladen werden, dort eine Konsistenz der Referenzierungen wiederhergestellt wird, und danach alle betroffenen Units (U_D, U_P) zu der Automatisierungskomponente übertragen werden.

3. Verfahren nach einem der vorhergehenden Patentansprüche,
**dadurch gekennzeichnet,**
**dass** als das Programmelement (A, ..., H) ein Funktionsbaustein, eine Funktion oder eine andere Funktionseinheit eines Automatisierungsprogramms verwendet wird.

4. Verfahren nach einem der vorhergehenden Patentansprüche,
**dadurch gekennzeichnet,**
**dass** als die Prüfsumme (UIFFP) ein Hash-Wert, ein digitaler Fingerprint oder ein anderer änderungssensitiver Indikator über die Übergabeparameter der referenzierbaren Schnittstellen der veröffentlichten Programmelemente (PE; A, B, E, F) einer Unit (U_D, U_P) verwendet wird.

5. Verfahren nach einem der vorhergehenden Patentansprüche,
**dadurch gekennzeichnet,**
**dass** die Programmelemente (A, ..., H) des Programms für die industrielle Automatisierungskomponente in Units (U_D, U_P) gegliedert werden, wobei die Gliederung anhand funktionaler Kriterien erfolgt, so dass die Programmelemente (A, ..., H), die zu einer konkreten Funktionalität des Programms notwendig sind, in eine oder mehrere Units zusammengefasst werden.

6. Verfahren nach einem der vorhergehenden Patentansprüche,
**dadurch gekennzeichnet,**
**dass** die Zuordnung der Programmelemente (A, ..., H) zu den Units (U_D, U_P) rekonfiguriert wird, wobei durch die Rekonfiguration die Anzahl der Referenzierungen zwischen den Units (U_D, U_P) verringert wird, indem einander referenzierende Programmelemente (A, ..., H) jeweils denselben Units (U_D, U_P) zugeordnet werden.

7. Engineering-System (ENG) zur Änderung eines Programms einer industriellen Automatisierungskomponente,
wobei das Programm aus einer Mehrzahl von Programmelementen (A, ..., H) besteht,
wobei das Engineering-System dazu eingerichtet ist, zur Änderung des Programms geänderte Programmelemente (A, ..., H) und davon abhängige Programmelemente (A, ..., H) zu der Automatisierungskomponente zu übertragen,
**dadurch gekennzeichnet,**
**dass** das Programm zumindest teilweise in Units (U_D, U_P) strukturiert ist,
wobei eine Unit (U_D, U_P) eine Gruppe von Programmelementen (A, ..., H) umfasst, wobei eine Unit (U_D, U_P) sowohl veröffentlichte Programmelemente (PE; A, B, E, F) mit einer von den Programmelementen anderer Units (U_D, U_P) referenzierbaren Schnittstelle, als auch nicht-veröffentlichte Programmelemente (NPE; C, D, G, H) mit einer nur innerhalb derselben Unit (U_D, U_P) referenzierbaren Schnittstellte umfassen kann,
**dass** das Engineering-System (ENG) dazu eingerichtet ist, dass über die Schnittstellen der veröffentlichen Programmelemente (PE; A, B, E, F) jeder Unit (U_D, U_P) eine Prüfsumme (UIFFP) gebildet und der Unit (U_D, U_P) jeweils zugeordnet wird,
**dass** bei einer Änderung zumindest eines Programmelementes (A, ..., H) der auf dem Engineering-System gespeicherten Version einer Unit (U_D, U_P) die Prüfsumme (UIFFP) der somit geänderten Unit (U_D, U_P) mit der Prüfsumme (UIFFP) der auf der Automatisierungskomponente vorhandenen bisherigen Version dieser Unit (U_D, U_P) verglichen wird, und
**dass** im Falle einer Übereinstimmung der Prüfsummen (UIFFP) nur die geänderte Unit (U_D, U_P) von dem Engineering-System (ENG) zu der Automatisierungskomponente übertragen wird, und
anderenfalls auch alle anderen Units (U_D, U_P), die die geänderte Unit (U_D, U_P) referenzieren, in ihrer jeweils aktuellen Version des Engineering-Systems (ENG) zu der Automatisierungskomponente übertragen werden.

8. Engineering-System (ENG) gemäß Patentanspruch 7,
**dadurch gekennzeichnet,**
**dass** vorgesehen ist,
**dass** vor der Übertragung der Unit (U_D, U_P) die Prüfsummen (UIFFP) der referenzierbaren Schnittstellen anderer auf der Automatisierungskomponenten vorhandenen Units (U_D, U_P), die durch die geänderte Unit (U_D, U_P) referenziert werden, zu dem Engineering-System (ENG) übertragen und dort mit den Prüfsummen der entsprechenden Versionen dieser auf dem Engineering-System (ENG) vorhandenen Versionen der Units (U_D, U_P) verglichen werden, wobei im Falle einer Abweichung die Units (U_D, U_P) mit den abweichenden Prüfsummen (UIFFP) von der Automatisierungskomponente zu dem Engineering-System geladen werden, dort eine Konsistenz der Referenzierungen wieder hergestellt wird, und danach alle betroffenen Units (U_D, U_P) zu der Automatisierungskomponente übertragen werden.

9. Engineering-System gemäß Patentanspruch 7 oder 8,
**dadurch gekennzeichnet,**
**dass** das Programmelement (A, ..., H) ein Funktionsbaustein, eine Funktion oder eine andere Funktionseinheit eines Automatisierungsprogramms ist.

10. Engineering-System (ENG) gemäß Patentanspruch 7, 8 oder 9,
**dadurch gekennzeichnet,**
**dass** die Prüfsumme (UIFFP) ein Hash-Wert, ein digitaler Fingerprint oder ein anderer änderungssensitiver Indikator über die Übergabeparameter der referenzierbaren Schnittstellen der veröffentlichten Programmelemente einer Unit (U_D, U_P) ist.

11. Engineering-System (ENG) gemäß Patentanspruch 7,8 ,9 oder 10,
**dadurch gekennzeichnet,**
**dass** die Programmelemente (A, ..., H) des Programms für die industrielle Automatisierungskomponente in Units (U_D, U_P) gegliedert sind, wobei die Gliederung anhand funktionaler Kriterien erfolgt, so dass die Programmelemente (A, ..., H), die zu einer konkreten Funktionalität des Programms notwendig sind, in eine oder mehrere Units zusammengefasst sind.

12. Engineering-System (ENG) gemäß Patentanspruch 7,8 ,9, 10 oder 11,
**dadurch gekennzeichnet,**
**dass** vorgesehen ist,
**dass** die Zuordnung der Programmelemente (A, ..., H) zu den Units rekonfiguriert werden kann, wobei durch die Rekonfiguration die Anzahl der Referenzierungen zwischen den Units (U_D, U_P) verringert wird,
indem einander referenzierende Programmelemente (A, ..., H) jeweils denselben Units (U_D, U_P) zugeordnet werden.
